# EUROPEAN PATENT APPLICATION

(11) **EP 4 804 387 A1**
(43) Date of publication of application: **09.09.2026**
(21) Application number: 26151844.3
(22) Date of filing: 14.01.2026
(51) Int. Cl.: H02K 3/52

(54) **MOTOR**

(30) Priority: 07.03.2025 KR 20250029740
(71) Applicant: Mando-Brose Corporation, Incheon 21990 (KR)
(72) Inventor: LEE, Namhoon, 18456 Hwaseong-si (KR); HEO, Jongwook, 15050 Siheung-si (KR); KIM, Sanghyun, 22394 Incheon (KR); YEO, Inyeol, 21648 Incheon (KR); KIM, Minbeom, 21969 Incheon (KR)
(74) Representative: Studio Torta S.p.A.

(57) **Abstract**

Disclosed are a motor. The motor according to the present exemplary embodiment may comprises: a stator (1); and a rotor configured to rotate by electromagnetic interaction with the stator (1), wherein the stator (1) comprises: a stator core (10) comprising a plurality of teeth (12) extending in a radial direction; a coil comprising a plurality of winding portions (21) wound around the teeth (12) to form a rotating magnetic field, and a connection portion (22) where both sides are connected to a pair of the winding portions (21); an insulator (30) insulating the coil from the stator core (10); and a guide member (40) provided on one side of the stator core (10) to guide the connection portion (22), wherein the guide member (40) comprises: a body (41) supported by the stator core (10) or the insulator (30); and a guide wing (42) extending radially from the body (41) and coupled to one side of the connection portion (22).

## Description

### CROSS REFERENCE TO PARENT APPLICATIONS

This application claims the benefit of Korean Patent Application Serial No. 10-2025-0029740 filed on March 7, 2025, in the Korean Intellectual Property Office, the entirety of which is incorporated herein by reference.

### BACKGROUND

### Field

The present disclosure relates to a motor, and more particularly, to a motor capable of preventing interference between coils of different phases.

### Description of the Related Art

In general, a motor comprises a stator and a rotor accommodated within a housing, and induces rotation of the rotor by causing electromagnetic interaction between the stator and the rotor.

The stator can be coupled to the housing by a press-fitting method to ensure stable fixation, and may comprise a plurality of unit cores and coils wound on each unit core.

Meanwhile, a single coil can be wound across multiple unit cores. In the case of a three-phase motor, each phase coil may form a connection portion that crosses cores wound with coils of other phases. At this time, interference may occur between the connection portion of each phase coil and coils of other phases.

To prevent this, the connection portions of the coils have conventionally been wrapped with insulating tubes to insulate them from other coils. However, this insulation method using insulating tubes complicates the assembly process, and in the event of damage such as tearing of the insulating tube after assembly, replacement becomes difficult.

### SUMMARY

An object to be achieved by the present disclosure is to provide a motor capable of improving productivity by omitting the insulating tube while insulating the connection portions of each phase coil from coils of other phases.

Another object to be achieved by the present disclosure is to provide a motor capable of improving productivity through efficient arrangement of internal components and an optimized assembly structure.

According to an aspect of the present disclosure, a motor comprising: a stator; and a rotor configured to rotate by electromagnetic interaction with the stator, wherein the stator comprises: a stator core comprising a plurality of teeth extending in a radial direction; a coil comprising a plurality of winding portions wound around the teeth to form a rotating magnetic field, and a connection portion where both sides are connected to a pair of the winding portions; an insulator insulating the coil from the stator core; and a guide member provided on one side of the stator core to guide the connection portion, wherein the guide member comprises: a body supported by the stator core or the insulator; and a guide wing extending radially from the body and coupled to one side of the connection portion.

The guide wing comprises a recess formed by cutting out so as to be coupled to one side of the connection portion.

One end of the guide wing is connected to an outer circumferential surface of the body, and the recess is formed at the other end of the guide wing to penetrate in an axial direction and to open outward in the radial direction.

The guide member comprises a reinforcing rib extending radially from the body to support the guide wing.

The guide member comprises a guide groove recessed in an outer circumferential surface of the body, in which an opposite side of the connection portion is entered and guided.

The guide groove is open at one axial end and closed at the other axial end.

The opposite side of the connection portion enters the one axial end of the guide groove that is opened, is bent and/or curved along the guide groove, and is guided toward the winding portion by the other axial end of the guide groove that is closed.

The connection portion comprises: a first section extending axially from one of the pair of winding portions and coupled to the guide wing; a second section bent from the first section and extending in the circumferential direction; and a third section bent from the second section and extending axially toward the other side to enter the guide groove.

The connection portion further comprises a fourth section bent from the third section, extending radially outward, and connected to the other one of the pair of winding portions.

The guide member comprises a fixing portion coupled between the insulator and the stator core to fix a position of the body.

The insulator comprises a coupling groove recessed at a radially inner end and open toward the stator core.

The fixing portion comprises a coupling member extending radially outward from the body and inserted into the coupling groove.

The fixing portion comprises a press-fitting protrusion projecting axially from the coupling member and supported by the insulator or the stator core.

The coupling member contacts the stator core, and the press-fitting protrusion contacts the coupling groove.

The insulator comprises a first insulator coupled to one end of the stator core and a second insulator coupled to the other end of the stator core, and the coupling groove is provided in the first insulator.

The first insulator comprises: a base coupled to the teeth and around which the coil is wound; an inner supporter configured to support the coil wound on the base from a radially inner side of the base; and an outer supporter configured to support the coil wound on the base from a radially outer side of the base, and the coupling groove is formed in the base.

The body comprises an extension portion axially extending at one end, and the coupling member is provided on the extension portion.

The motor further comprising a housing in which the stator is fixed, wherein the guide member comprises a spacer axially extending from the body to maintain a gap between the connection portion and the housing.

The motor further comprising a shaft coupled to the rotor and configured to rotate with the rotor, wherein the body is annularly formed and through which the shaft passes, and the guide member comprises a barrier axially extending from the body and disposed between the connection portion and the shaft to prevent interference.

According to the exemplary embodiment of the present disclosure, the motor can improve productivity by omitting the insulating tube while insulating the connection portions of each phase coil from coils of other phases.

According to the exemplary embodiment of the present disclosure, the motor can improve productivity through efficient arrangement of internal components and an optimized assembly structure.

The effects of the present disclosure are not limited to the aforementioned effects, and other effects, which are not mentioned above, will be apparently understood to a person having ordinary skill in the art from the following description.

The objects to be achieved by the present disclosure, the means for achieving the objects, and the effects of the present disclosure described above do not specify essential features of the claims, and, thus, the scope of the claims is not limited to the disclosure of the present disclosure.

### BRIEF DESCRIPTION OF THE DRAWINGS

The above and other aspects, features and other advantages of the present disclosure will be more clearly understood from the following detailed description taken in conjunction with the accompanying drawings, in which:
FIG. 1 is a perspective view of a motor according to the present exemplary embodiment;
FIG. 2 is a plan view of the motor according to the present exemplary embodiment;
FIG. 3 is a side view of the motor according to the present exemplary embodiment;
FIG. 4 is a cross-sectional view taken along line I-I of FIG. 2;
FIG. 5 is an exploded perspective view illustrating a stator core segment and an insulator of the motor according to the present exemplary embodiment;
FIG. 6 is a perspective view illustrating a state in which the stator core segment and the insulator of the motor according to the present exemplary embodiment are coupled;
FIG. 7 is a perspective view illustrating a guide member of the motor according to the present exemplary embodiment;
FIG. 8 is a plan view illustrating the guide member of the motor according to the present exemplary embodiment;
FIG. 9 is a side view illustrating the guide member of the motor according to the present exemplary embodiment;
FIG. 10 is a perspective view illustrating a state in which the guide member, the stator core segment, the coil, and the insulator of the motor according to the present exemplary embodiment are coupled;
FIG. 11 is a plan view illustrating a state in which the guide member is separated from the stator core segment and the insulator of the motor according to the present exemplary embodiment; and
FIG. 12 is a perspective view illustrating a state in which the guide member is separated from the stator core segment, the coil, and the insulator of the motor according to the present exemplary embodiment, shown from a direction different from FIG. 10.

### DETAILED DESCRIPTION OF EMBODIMENTS

Hereinafter, exemplary embodiments of the present disclosure will be described in detail with reference to the accompanying drawings. The following exemplary embodiments are presented to sufficiently convey the idea of the present disclosure to those skilled in the art. The present disclosure is not limited only to the exemplary embodiments to be presented below, but may be embodied in other forms. In order to clarify the present disclosure, parts unrelated to the description may be omitted, and a size of components may be slightly exaggerated to aid understanding.

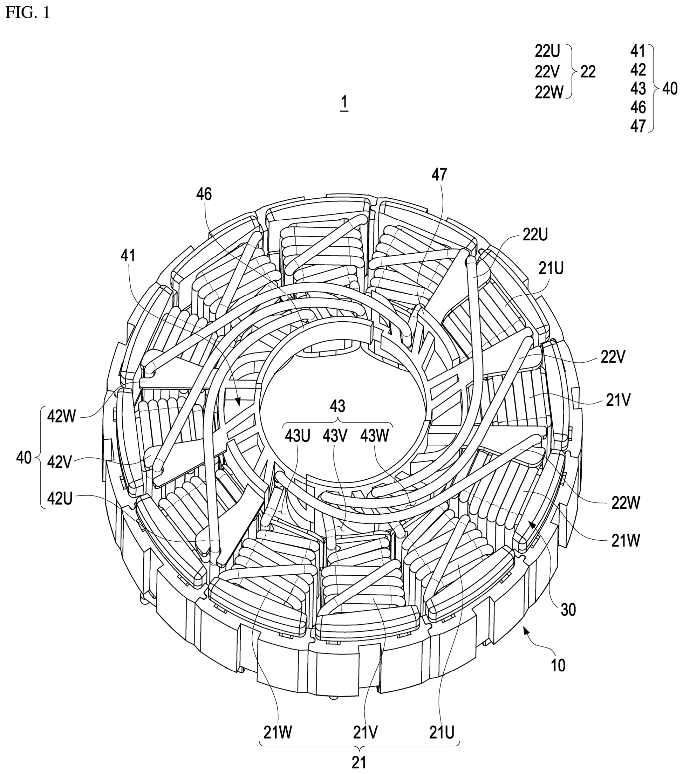

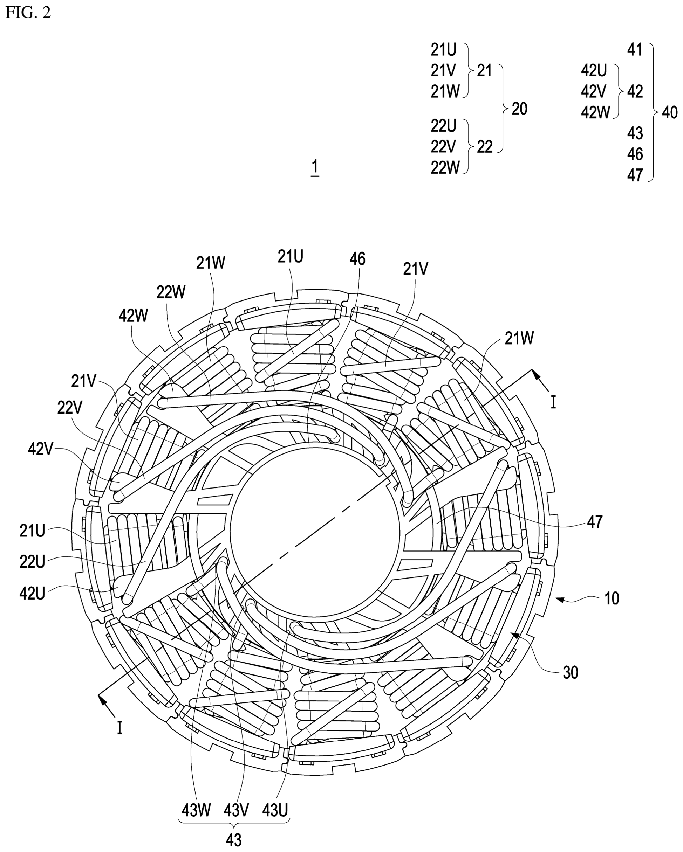

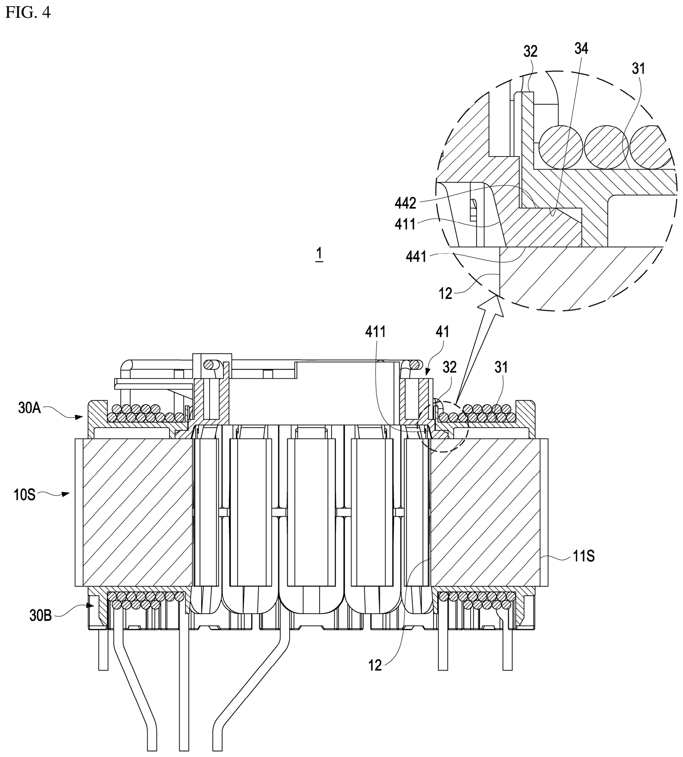

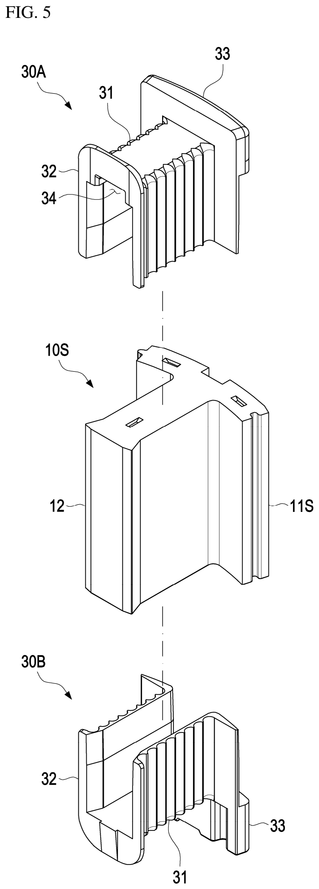

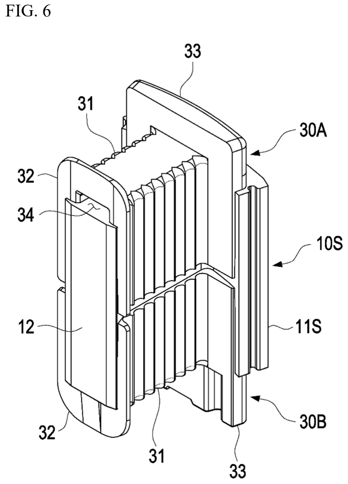

FIGS. 1 to 3 are a perspective view, a plan view, and a side view of a motor according to the present exemplary embodiment, respectively, FIG. 4 is a cross-sectional view taken along line I-I of FIG. 2, and FIGS. 5 and 6 are an exploded perspective view illustrating a stator core segment 10S and an insulator 30 of the motor according to the present exemplary embodiment and a perspective view illustrating a state in which they are coupled, respectively.

Referring to FIGS. 1 to 6, the motor according to the present exemplary embodiment may comprise a housing (not shown), a stator 1 fixed inside the housing, a rotor (not shown) configured to rotate by electromagnetic interaction with the stator 1, and a shaft (not shown) coupled to the rotor and configured to rotate together with the rotor, and hereinafter, the motor according to the present exemplary embodiment will be described on the basis of a three-phase motor, but it is not limited thereto, and may be configured as a motor of various phases such as two-phase or four-phase as needed.

The housing may comprise a container (not shown) having one end open to accommodate the stator 1 and the rotor therein, and a cover (not shown) coupled to one end of the container to seal the interior.

The rotor may comprise a rotor core (not shown) and a magnet (not shown) coupled to the periphery of the rotor core or a pocket (not shown) adjacent thereto to impart polarity to the rotor, and the rotor may be disposed radially inward of the stator 1.

The shaft may be coupled to the rotor core and rotate together therewith, and the shaft may extend outside the housing to transmit rotational force externally during motor operation, and a bearing (not shown) for rotatably supporting the rotation shaft may be installed in the container and cover through which the shaft passes.

The stator 1 may comprise a stator core 10, a coil 20 wound around the stator core 10 to form a rotating magnetic field, an insulator 30 insulating between the coil 20 and the stator core 10, and a guide member 40 provided on one side of the stator core 10 to guide the arrangement of a connection portion 22.

The stator core 10 may be configured integrally or by stacking a plurality of laminations, and may comprise a generally annular back yoke 11 and a plurality of teeth 12 extending radially inward along the periphery of the back yoke 11. Here, the back yoke 11 may be formed by coupling a plurality of arcuate segments 11S to form an annular structure. That is, the stator core 10 may be configured by coupling a plurality of segments 10S in the circumferential direction.

The stator 1 may be fixed to the housing as the stator core 10 is hot-pressed into the container (not shown). For this purpose, the stator core 10 is heated and press-fitted into the container with an expanded inner diameter, and when the container cools and contracts while the stator core 10 is press-fitted, the outer circumferential surface of the stator core 10 may closely contact the inner circumferential surface of the container to be fixed.

The coil 20 may be wound around the teeth 12 of the stator core 10 to form a rotating magnetic field, and the coil 20 and the stator core 10 may be insulated from each other by an insulator 30 made of a resin material. For example, the coil 20 may comprise a U-phase coil 20U, a V-phase coil 20V, and a W-phase coil 20W.

The insulator 30 may comprise a first insulator 30A coupled to one end of the stator core 10 and a second insulator 30B coupled to the other end of the stator core 10.

The first insulator 30A and the second insulator 30B may each be provided as a plurality arranged in the circumferential direction, and the plurality of first insulators 30A and second insulators 30B may be coupled together at both ends of the stator core 10.

Each of the first insulator 30A and the second insulator 30B may comprise a base 31 around which the coil 20 is wound, an inner supporter 32 configured to support the coil 20 wound on the base 31 from the radially inner side of the base 31, and an outer supporter 33 configured to support the coil 20 wound on the base 31 from the radially outer side of the base 31.

The base 31 may be inserted from the outer side of the end of the stator core 10 toward the inner end and coupled to the teeth 12, and a ribbed structure may be provided on the outer surface of the base 31 so that the wound coil 20 can be seated.

The inner supporter 32 and the outer supporter 33 may be each configured to extend in the circumferential direction from the inner and outer ends of the base 31 toward both sides and outward of the end of the stator core 10 in order to support the coil 20 wound on the base 31 from the radially inner and outer sides, respectively.

The base 31, the inner supporter 32, and the outer supporter 33 may be integrally formed during the molding process of each of the first insulator 30A and the second insulator 30B.

The first insulator 30A may be coupled by being fitted from the outer side to the inner side of one end of the stator core 10, and the second insulator 30B is coupled by being fitted from the outer side to the inner side of the other end of the stator core 10. Therefore, the coupling positions and coupling directions of the first insulator 30A and the second insulator 30B are opposite to each other, and in this state, the teeth 12 of the stator core 10 may be surrounded by the bases 31 of the first insulator 30A and the second insulator 30B.

In addition, the first insulator 30A may comprise a coupling groove 34 recessed at the radially inner end of the base 31. The coupling groove 34 may be open toward the stator core 10 in the axial direction and closed at the opposite side. When the first insulator 30A is coupled to the teeth 12 of the stator core 10, the coupling groove 34 is closed in both axial directions and open only in the radially inner direction. The coupling groove 34 receives a fixing portion 44 of the guide member 40, which will be described later, and by the first insulator 30A and the stator core 10 supporting the fixing portion 44, the position of the guide member 40 can be fixed. The coupling groove 34 may be formed integrally during the molding process of the first insulator 30A.

Meanwhile, a single coil 20 may be wound around a plurality of teeth 12. Accordingly, the coil 20 may comprise a plurality of winding portions 21 wound around the teeth 12 and at least one connection portion 22 both sides of which are connected to a selected pair among the plurality of winding portions 21. For example, when a single coil 20 is wound around a pair of teeth 12, the coil 20 may comprise a pair of winding portions 21 and a single connection portion 22.

Hereinafter, the description is based on a case in which a single coil 20 is wound around a pair of teeth 12, but the present exemplary embodiment also encompasses cases in which a single coil 20 is wound around three or more teeth 12.

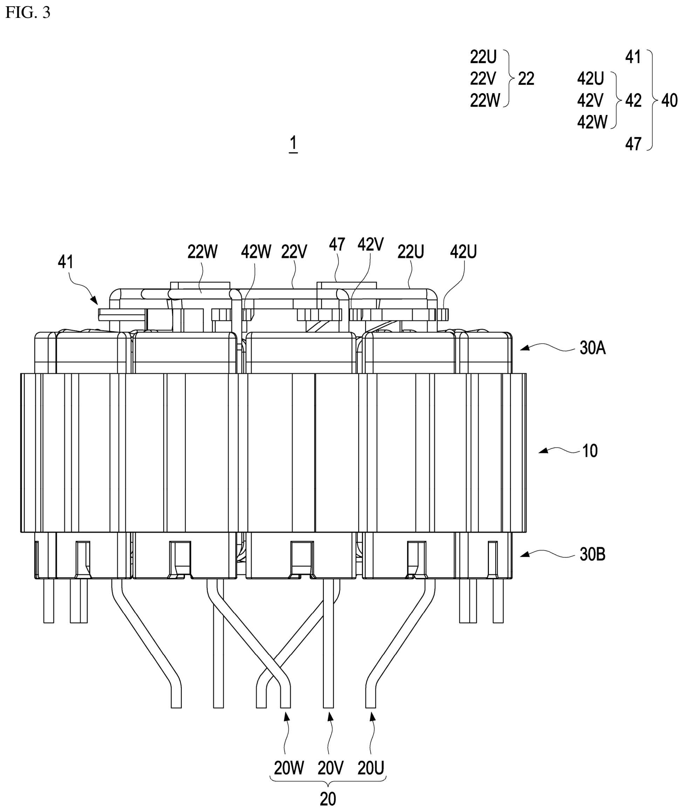

The winding portions 21 may comprise a U-phase winding portion 21U, a V-phase winding portion 21V, and a W-phase winding portion 21W, which may be sequentially arranged in a first circumferential direction as U-phase winding portion 21U, V-phase winding portion 21V, and W-phase winding portion 21W. The connection portion 22 may comprise a U-phase connection portion 22U connecting a pair of U-phase winding portions 21U, a V-phase connection portion 22V connecting a pair of V-phase winding portions 21V, and a W-phase connection portion 22W connecting a pair of W-phase winding portions 21W, wherein each phase connection portion 22 may be arranged to cross over one side of the winding portions 21 of a different phase (top side in reference to Fig. 3). In this case, interference may occur between the connection portion 22 and the winding portions 21, and the arrangement of the connection portion 22 may be guided by the guide member 40 to insulate the connection portion 22 from the winding portions 21.

Hereinafter, an insulation structure through the guide member 40 will be described.

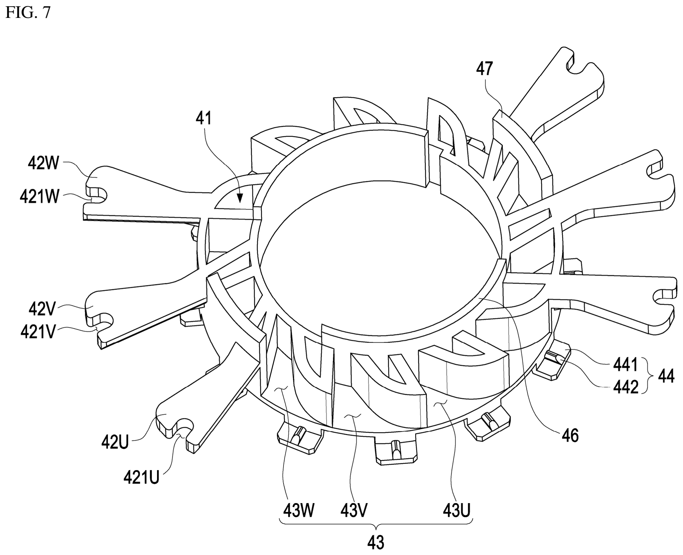

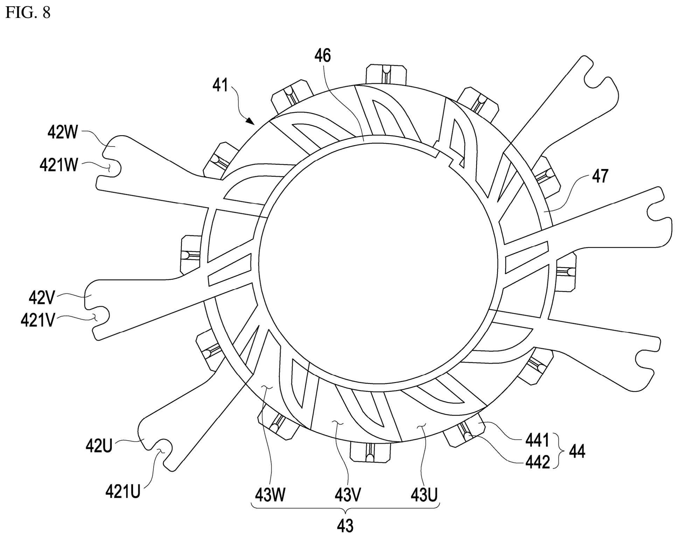

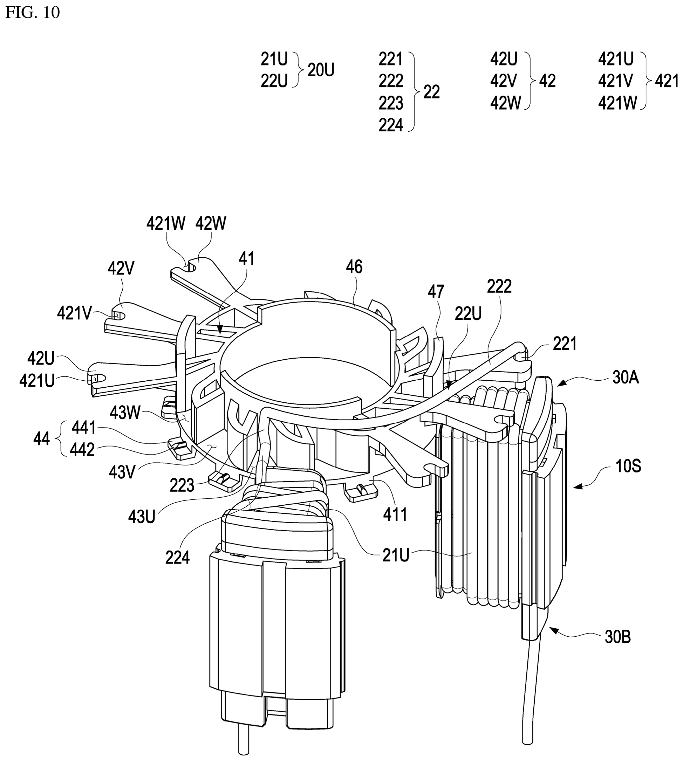

Figures 7 to 9 are a perspective view, a plan view, and a side view, respectively, illustrating the guide member 40 in the motor according to the present exemplary embodiment, and Figure 10 is a perspective view illustrating a state in which the guide member 40, the stator core segment 10S, the coil 20, and the insulator 30 are assembled in the motor according to the present exemplary embodiment.

Referring to FIGS. 1 to 4 and FIGS. 7 to 10, the guide member 40 may comprise a body 41 provided on one axial side of the stator core 10, a guide wing 42 extending radially from the body 41, a guide groove 43 recessed in an outer circumferential surface of the body 41, a spacer 47 axially extending from the body 41 to maintain a gap between the connection portion 22 and the housing, and a barrier 46 axially extending from the body 41 and disposed between the connection portion 22 and the shaft to prevent mutual interference.

The body 41 is made of a resin material and may be generally annular. An opening (not designated by a reference numeral) is formed in the interior of the body 41, through which the shaft may pass. The body 41 may have a hollow structure to reduce weight while maintaining rigidity through ribs (not designated by a reference numeral); however, it is not limited thereto, and the body 41 may alternatively be provided in a solid rigid form.

One end (upper end in FIG. 4) of the body 41 may be positioned radially inward of the insulator 30, and the other end (lower end in FIG. 4) may be arranged to protrude axially outward with respect to the insulator 30. A fixing portion 44, described later, is provided at one end of the body 41 to support the body 41 on the stator core 10 or the insulator 30.

Meanwhile, one side of the connection portion 22 is connected to one of the pair of winding portions 21, and the other side may be connected to the other of the pair of winding portions 21. The guide wing 42 may be coupled to one side of the connection portion 22 to guide its arrangement, and the guide groove 43 may allow the other side of the connection portion 22 to enter and be guided.

The guide wing 42 may comprise a recess 421 formed by cutting so as to be coupled to one side of the connection portion 22. Specifically, the guide wing 42 extends in the radial direction with one end connected to the outer circumferential surface at the other end of the body 41, and the recess 421 may be formed at the other end of the guide wing 42 to penetrate in the axial direction and open outward in the radial direction. Accordingly, one side of the connection portion 22 may enter the recess 421 in the radial direction and be coupled thereto. However, the recess 421 is not necessarily formed at the other end of the guide wing 42 and may be formed at a position between the ends of the guide wing 42.

In addition, the recess 421 may have an arcuate shape with a central angle exceeding 180 degrees. This configuration prevents the connection portion 22 from disengaging from the recess 421 and allows the guide wing 42 to stably guide one side of the connection portion 22.

A plurality of guide wings 42 may be provided to be coupled to the connection portions 22 of respective phases. Specifically, the guide wings 42 may comprise a first guide wing 42U with a first recess 421U coupled to a U-phase connection portion 22U, a second guide wing 42V with a second recess 421V coupled to a V-phase connection portion 22V, and a third guide wing 42W with a third recess 421W coupled to a W-phase connection portion 22W.

Meanwhile, the guide member 40 may comprise a reinforcing rib 45 extending radially from the outer circumferential surface of the body 41 to support the guide wing 42. For example, the reinforcing rib 45 may be provided as a triangular rib, which enhances the rigidity of the guide wing 42 and reduces bending deformation due to axial loads. Such a reinforcing rib 45 may be integrally formed with the body 41 and the guide wing 42 during the molding process of the guide member 40.

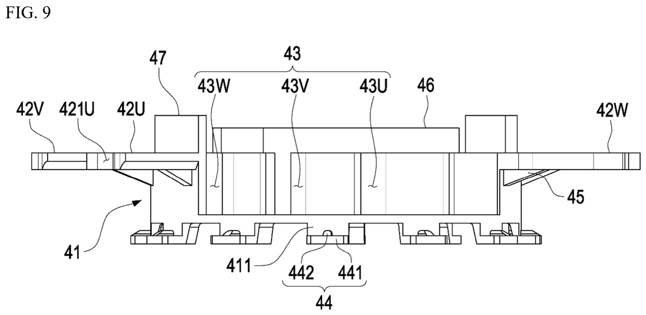

The guide groove 43 may be open at one axial end (upper side in FIG. 9) and closed at the other axial end (lower side in FIG. 9). The other side of the connection portion 22 enters through the open axial end of the guide groove 43, is bent or curved within the guide groove 43, and is guided toward the other one of the pair of winding portions 21 by the closed axial end of the guide groove 43. However, the guide groove 43 may alternatively have both axial ends closed, in which case the other side of the connection portion 22 may enter the guide groove 43 in the radial direction.

The guide groove 43 may be provided in a spiral shape winding toward the center of the stator core 10 in a first circumferential direction, and the width of the radially outer open side may be larger than that of the radially inner closed side. This configuration allows the other side of the connection portion 22 to be smoothly drawn from the guide groove 43 toward the other one of the pair of winding portions 21, while at the same time partially limiting movement of the other side of the connection portion 22 within the guide groove 43.

The guide groove 43 may comprise a first guide groove 43U for guiding the U-phase connection portion 22U, a second guide groove 43V for guiding the V-phase connection portion 22V, and a third guide groove 43W for guiding the W-phase connection portion 22W.

On the outer circumferential surface of the body 41, the first guide wing 42U, the second guide wing 42V, the third guide wing 42W, the first guide groove 43U, the second guide groove 43V, and the third guide groove 43W may be sequentially arranged in a first circumferential direction.

Meanwhile, the connection portion 22 may comprise a first section 221 extending axially from one of the pair of winding portions 21 (upper side in FIG. 3) and coupled to the guide wing 42, a second section 222 bent from the first section 221 and extending in the circumferential direction, a third section 223 bent from the second section 222 and extending axially toward the other side (lower side in FIG. 3) to enter the guide groove 43, and a fourth section 224 bent from the third section 223, extending radially outward, and connected to the other one of the pair of winding portions 21.

The first section 221 may be connected to one of the winding portions 21 from the radially outer side of the winding portion 21. The other end of the guide wing 42 may be positioned adjacent to the outer supporter 33 of the insulator 30 and coupled to the first section 221.

A first bending portion (not designated by a reference numeral) between the second section 222 and the first section 221 may be positioned relatively radially outward compared to a second bending portion (not designated by a reference numeral) between the second section 222 and the third section 223. Accordingly, the second section 222 may form a spiral shape winding toward the center of the stator core 10 in a first circumferential direction.

The third section 223 bent from the second section 222 may enter the open axial end (upper side in FIG. 9) of the guide groove 43. Alternatively, the guide groove 43 may have both axial ends closed, in which case the other side of the second section 222 may enter the guide groove 43, and the third section 223 may be bent within the guide groove 43.

The fourth section 224 bent from the third section 223 may be connected to the other one of the winding portions 21 from the radially inner side of the winding portion 21.

Thus, in the motor according to the present exemplary embodiment, each phase connection portion 22 may be spaced apart from the winding portions 21 by a certain distance through the guide wing 42, thereby achieving insulation between them.

In addition, the connection portions 22 of each phase generally form a spiral shape, with the U-phase connection portion 22U, the V-phase connection portion 22V, and the W-phase connection portion 22W sequentially arranged along the first circumferential direction. Each phase connection portion 22 is arranged in parallel with the connection portions 22 of other phases without crossing each other in the circumferential direction, thereby preventing mutual interference. As a result, an insulating tube may be omitted, improving productivity.

Meanwhile, although not shown in the drawings, the motor according to the present exemplary embodiment may further comprise an insulating tape or an insulating tube covering the second section 222 of the V-phase connection portion 22V as needed, thereby providing redundant insulation and enhancing operational reliability. In this case, the insulating tubes for the U-phase connection portion 22U and the W-phase connection portion 22W may be omitted. Alternatively, insulation redundancy may be achieved through a filler or similar material placed between the connection portions 22 of different phases.

The barrier 46 may extend from the inner circumferential side of the body 41 to prevent interference between the second section 222 of the connection portion 22 and the shaft (not shown), and be provided in various shapes, such as annular or arcuate, as required. The barrier 46 may extend a predetermined length to block the space between the connection portion 22 and the shaft, and may limit movement of the connection portion 22 from the radially inner side during guidance through the guide member 40.

The spacer 47 may extend from one end of the body 41 (upper side in FIG. 9) and be configured to protrude axially outward beyond the connection portion 22. When the stator 1 is press-fitted and fixed in the housing (not shown), one end of the spacer 47 (upper side in FIG. 3) may face or be supported by the bottom of the container or a cover (not shown), and through the spacer 47, the connection portion 22 may be spaced a certain distance or more from the bottom or cover of the container.

When the guide member 40 has a hollow structure, the spacer 47 may extend from the outer circumferential side of the body 41. For example, the spacer 47 may be positioned between one end of the first guide wing 42U and one end of the second guide wing 42V on the outer circumferential side of the body 41. This allows the guide member 40 to smoothly guide the connection portion 22 without interference between the connection portion 22 and the spacer 47. Although not shown in the drawings, the spacer 47 may alternatively extend from a rib (not designated by a reference numeral) of the body 41. The spacer 47 may be provided at another position as long as the connection portion 22 can be guided smoothly.

The spacer 47 and the barrier 46 may be integrally formed with the body 41 during the molding process.

Thus, in the motor according to the present exemplary embodiment, the arrangement of the connection portions 22 may be guided through the guide wing 42, the guide groove 43, the barrier 46, and the spacer 47, thereby preventing interference between the connection portions 22 of each phase and coils 20 of other phases, the housing, or the shaft.

Hereinafter, the assembly structure of the stator 1 through the guide member 40 will be described.

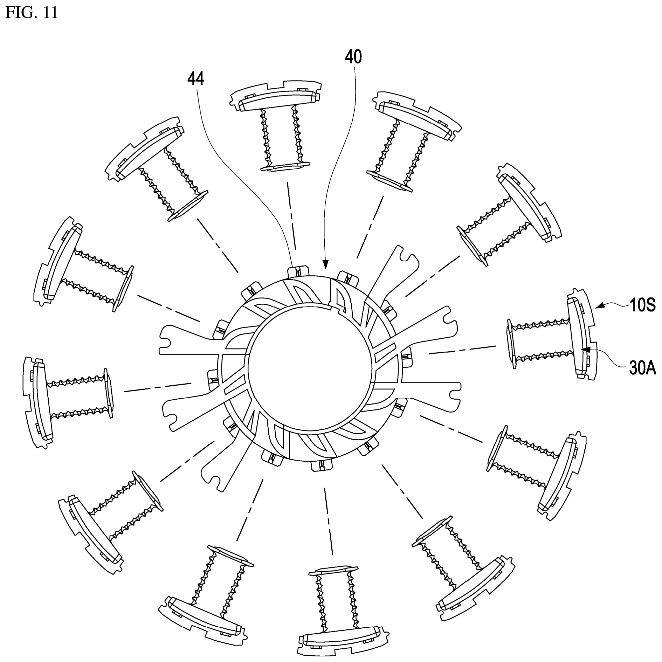

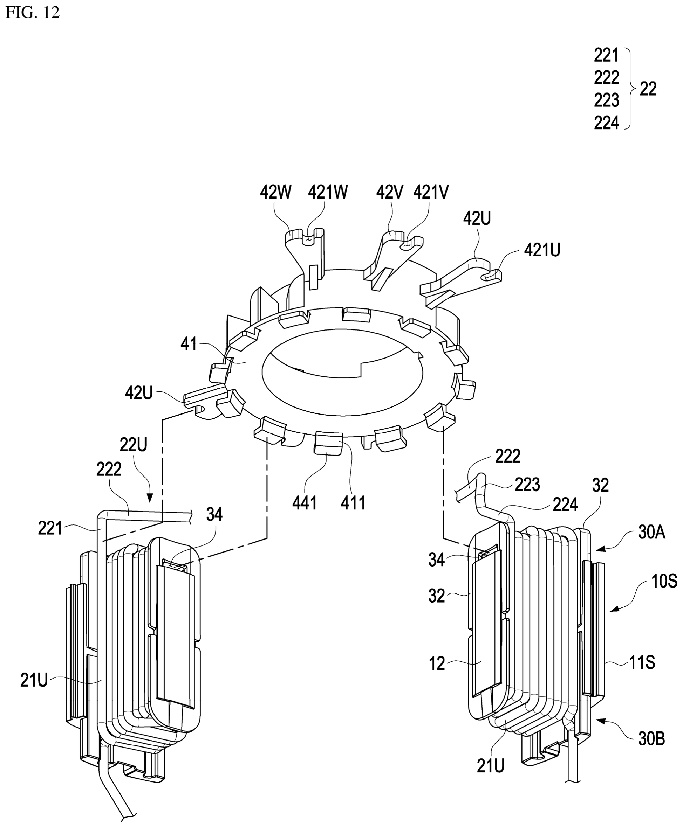

FIG. 11 is a plan view illustrating a state in which the guide member 40 is separated from the stator core segment 10S and the insulator 30 in the motor according to the present exemplary embodiment, and FIG. 12 is a perspective view showing a state in which the guide member 40 is separated from the stator core segment 10S, the coil 20, and the insulator 30 of the motor according to the present exemplary embodiment, shown from a direction different from FIG. 10.

Referring to FIGS. 4 to 12, the guide member 40 may comprise a fixing portion 44 inserted into and coupled with a coupling groove 34 between the first insulator 30A and the stator core 10.

The fixing portion 44 may comprise a coupling member 441 extending radially outward from the body 41, and a press-fitting protrusion 442 projecting axially from the coupling member 441 and supported by the first insulator 30A or the stator core 10.

The coupling member 441 may be provided in a substantially plate-like shape, with one surface (lower surface in FIG. 4) supported by the stator core 10. The press-fitting protrusion 442 may be provided on the other surface (upper surface in FIG. 4) of the coupling member 441 and supported by the first insulator 30A. In this case, since the first insulator 30A and the stator core 10 are pressed together by the winding of the coil 20, the coupling member 441 and the press-fitting protrusion 442 are stably supported between the stator core 10 and the first insulator 30A, thereby limiting axial movement of the body 41.

The press-fitting protrusion 442 may comprise a chamfer formed at the radially outer end. That is, the axial thickness of the fixing portion 44 at the radially outer end is smaller than the thickness at the radially inner side. Accordingly, during the initial insertion of the fixing portion 44 into the coupling groove 34, the fixing portion 44 can easily enter the coupling groove 34. Once the entire chamfer has entered the coupling groove 34, the press-fitting protrusion 442 comes into contact with the first insulator 30A, and the coupling member 441 comes into contact with the stator core 10, so that the fixing portion 44 enters the coupling groove 34 and can be press-fitted and secured therein.

However, the present exemplary embodiment is not limited thereto, and the fixing portion 44 may be formed solely of the plate-like coupling member 441 without the press-fitting protrusion 442. In this case, the coupling member 441 may be supported on both axial surfaces by the stator core 10 and the first insulator 30A, respectively. Additionally, the coupling member 441 may comprise a chamfer at the radially outer end.

Meanwhile, the body 41 may comprise an extension portion 411 axially extending from the other end (lower side in FIG. 4), and the coupling member 441 may be provided at the end of the extension portion 411. Through this extension portion 411, the inner space of the stator 1 in which the rotor is disposed can be expanded. Thus, in the motor according to the present exemplary embodiment, the extension portion 411 of the body 41 allows efficient arrangement of internal components.

However, without the extension portion 411, the coupling member 441 may extend from the outer circumferential surface of the body 41 and be inserted into the coupling groove 34.

A plurality of the fixing portions 44 are provided along the circumferential direction of the body 41. During the assembly of the motor, a plurality of back yoke segments 11S are coupled with adjacent back yoke segments 11S in the circumferential direction to form an annular back yoke 11, and at the same time, the plurality of fixing portions 44 may be press-fitted into the coupling grooves 34 arranged along the circumferential direction. Accordingly, the plurality of fixing portions 44 cooperatively limit circumferential movement of the body 41.

In this manner, the fixing portions 44 can limit both axial and circumferential movement of the body 41, thereby fixing the position of the body 41. Moreover, in the motor according to the present exemplary embodiment, the plurality of fixing portions 44 can guide the assembly position of the stator core segments 10S and the insulator 30, thereby improving productivity.

Meanwhile, referring to FIGS. 1, 2, and 10, the U-phase connection portion 22U is positioned radially inward of the V-phase connection portion 22V, and the V-phase connection portion 22V is positioned radially inward of the W-phase connection portion 22W. Therefore, during the assembly of the motor, if the stator core segment 10S wound with the U-phase coil 20U is first coupled to the guide member 40, followed by coupling the stator core segment 10S wound with the V-phase coil 20V, and then coupling the stator core segment 10S wound with the W-phase coil 20W, crossing between the connection portions 22 of each phase can be prevented, thereby improving assemblability.

However, the present exemplary embodiment is not limited thereto, and the stator core segments 10S wound with the coils 20 of each phase may be coupled to the guide member 40 simultaneously or in other sequences as required.

## Claims

1. A motor, comprising:
a stator (1); and
a rotor configured to rotate by electromagnetic interaction with the stator (1),
wherein the stator (1) comprises:
a stator core (10) comprising a plurality of teeth (12) extending in a radial direction;
a coil comprising a plurality of winding portions (21) wound around the teeth (12) to form a rotating magnetic field, and a connection portion (22) where both sides are connected to a pair of the winding portions (21);
an insulator (30) insulating the coil from the stator core (10); and
a guide member (40) provided on one side of the stator core (10) to guide the connection portion (22),
wherein the guide member (40) comprises:
a body (41) supported by the stator core (10) or the insulator (30); and
a guide wing (42) extending radially from the body (41) and coupled to one side of the connection portion (22).

2. The motor of claim 1, wherein the guide wing (42) comprises
a recess (421) formed by cutting out so as to be coupled to one side of the connection portion (22).

3. The motor of claim 1 or 2, wherein
one end of the guide wing (42) is connected to an outer circumferential surface of the body (41), and
the recess (421) is formed at the other end of the guide wing (42) to penetrate in an axial direction and to open outward in the radial direction.

4. The motor of claim 1, 2 or 3, wherein the guide member (40) comprises a reinforcing rib (45) extending radially from the body (41) to support the guide wing (42).

5. The motor of any one of claims 1 to 4, wherein the guide member (40) comprises
a guide groove (43) recessed in an outer circumferential surface of the body (41), in which an opposite side of the connection portion (22) is entered and guided.

6. The motor of claim 5, wherein the guide groove (43) is open at one axial end and closed at the other axial end.

7. The motor of claim 6, wherein
the opposite side of the connection portion (22) enters the one axial end of the guide groove (43) that is opened, is bent and/or curved along the guide groove (43), and is guided toward the winding portion by the other axial end of the guide groove (43) that is closed.

8. The motor of claim 5, 6 or 7, wherein the connection portion (22) comprises:
a first section extending axially from one of the pair of winding portions (21) and coupled to the guide wing (42);
a second section bent from the first section and extending in the circumferential direction; and
a third section bent from the second section and extending axially toward the other side to enter the guide groove (43).

9. The motor of any one of claims 1 to 8, wherein the guide member (40) comprises
a fixing portion (44) coupled between the insulator (30) and the stator core (10) to fix a position of the body (41).

10. The motor of claim 9, wherein the insulator (30) comprises
a coupling groove (34) recessed at a radially inner end and open toward the stator core (10).

11. The motor of claim 10, wherein the fixing portion (44) comprises
a coupling member extending radially outward from the body (41) and inserted into the coupling groove (34).

12. The motor of claim 11, wherein the fixing portion (44) comprises
a press-fitting protrusion projecting axially from the coupling member and supported by the insulator (30) or the stator core (10).

13. The motor of claim 11 or 12, wherein
the body (41) comprises an extension portion axially extending at one end, and
the coupling member is provided on the extension portion.

14. The motor of any one of claims 1 to 13, further comprising a housing in which the stator (1) is fixed,
wherein the guide member (40) comprises a spacer axially extending from the body (41) to maintain a gap between the connection portion (22) and the housing.

15. The motor of any one of claims 1 to 14, further comprising a shaft coupled to the rotor and configured to rotate with the rotor,
wherein the body (41) is annularly formed and through which the shaft passes, and
the guide member (40) comprises a barrier axially extending from the body (41) and disposed between the connection portion (22) and the shaft to prevent interference.
